# EUROPEAN PATENT SPECIFICATION

(11) **EP 1 591 919 B1**
(45) Date of publication and mention of the grant of the patent: **14.05.2008**
(21) Application number: 05009088.5
(22) Date of filing: 26.04.2005
(51) Int. Cl.: G06F 17/30

(54) **Method for providing apparatus specific information and corresponding system**
Verfahren und System zur Bereitstellung von spezifischen Vorrichtungsinformationen
Procédé et système pour fournir des informations spécifiques d'appareil

(30) Priority: 28.04.2004 US 566033 P
(43) Date of publication of application: 02.11.2005
(73) Proprietor: VEGA Grieshaber KG, 77709 Wolfach (DE)
(72) Inventor: Kech, Guenther, 77709 Wolfach (DE); Gros, Thomas, 56479 Neustadt/Westerwald (DE)
(74) Representative: Kopf, Korbinian Paul

(56) References cited:
- EP-A- 0 621 565
- EP-A- 1 058 196
- US-A1- 2002 026 440
- US-A1- 2002 038 317
- PATENT ABSTRACTS OF JAPAN vol. 2003, no. 09, 3 September 2003 (2003-09-03) -& JP 2003 140710 A (SONY CORP), 16 May 2003 (2003-05-16)
- BERGMAN R ET AL: "Automated workflow for engineering services" AEROSPACE CONFERENCE PROCEEDINGS, 2002. IEEE MAR 9-16, 2002, PISCATAWAY, NJ, USA,IEEE, vol. 5, 9 March 2002 (2002-03-09), pages 2553-2568, XP010604624 ISBN: 0-7803-7231-X

## Description

### TECHNICAL FIELD OF THE INVENTION

The present invention relates to a method for providing updated apparatus specific information and a corresponding system comprising a management device, a field apparatus, and an access to a link network.

### BACKGROUND OF THE INVENTION

After a field apparatus like a sensor or an actuator is finished, it is known from prior art to determine characteristics of a the field apparatus, as for example serial number, manufacturing data, linearity parameters, measuring range, operative range with respect to temperature, electrical characteristics (operating voltage, connection power, output characteristics, etc.) manually or by means of an automat. After manually determining these data, they are available for a user together with operating instructions, technical manual, approval documents, reliability statements, and so on either on paper or as electronic document.

The electronic document could also be obtained by the user via the internet. For this, the user had to search on a web page of the manufacturer for the apparatus type. If he found the right apparatus type, the desired documents, data or software could be downloaded from the web page or sent by email.

To store all these documents, cost-intensive archives were needed. The user himself had to have a substantial organizational system, guaranteeing, if need be, recovering and making the documents available in reasonable time.

The effort was less in case the user had a system stored on a CD-ROM or hard disc. However, even in the case of a networked process control system, he needed to carry out a manual assignment of the document file and the measuring unit (TAG no.). This also resulted in time and cost expenditure, and even possible input errors.

During updating of products (software update, apparatus upgrade, repair, maintenance, etc.) the search via the internet can be problematic, especially due to possible new apparatus or software versions. The new assignment, thus, also has to be carried out manually involving all the already mentioned risks.

EP 1 058 196 A2 discloses a method for encoding a file address, i.e. for internet files, in a bar code symbol, decoding the bar code symbol and accessing the relevant file automatically.

US 2002/038317 A1 discloses a method for transferring from a memory on a measuring device to a operational unit, in addition to parameter values , representational data that defines the presentation of the parameter values on operation unit to display and optionally modify the parameter values; the representational data is stored in the measuring device in a file with a format adapted to the program used.

EP 0 621 565 A1 discloses a system wherein memory means of a post are read-accessible and possibly write-accessible by a central computer; the central computer knows the structure of the memory means and the format of an elementary data group for each type of application, as well as an address and a type of application of each of the posts to which it is connected, and is able to address the memory means of a post which has been selected in such a way as to retrieve, in the memory means, all the elementary data groups which have been stored since the last enquiry. The system of the invention allows the centralising at the level of a single central computer of information identified and time-stamped from posts dedicated to varied applications, such as access control, the clocking-on of staff..., for analysis and management purposes.

JP 2003-140710 A discloses a system where a database server retrieves information associated with equipment from a database and provides it. The database is connected to the database server, and manages and stores the information associated with the equipment. Autonomous equipment (robot, information home electrical appliance) receives information from the database server or autonomous equipment (robot, information home electrical appliance) and performs an operation corresponding to the autonomous equipment based on an autonomous program. The autonomous equipment receives the information from the database server or the autonomous equipment and performs an operation corresponding to the autonomous equipment based on an autonomous program. A network transmits the information or request information as an IPv6 packet. A short-range communicating means confirms the existence of equipment existing in the neighborhood.

Bergman R. et al: "Automated workflow for engineering services" Aerospace Conference Proceedings, 2002. IEEE Mar 9-16, 2002, Piscataway, NJ, USA, IEEE, vol. 5, 9 March 2002 (2002-03-09), pages 2553-2568, XP010604624 ISBN: 0-7803-7231-x discloses a prototype of an automated workflow system that provides navigation and telecommunication services.

### SUMMARY OF THE INVENTION

Implementations of the invention can include one or more of the following features.

According to an aspect of the present invention, a method for providing apparatus specific information for at least one field apparatus is provided, whereby the field apparatus is connected via a bus to a management device managing apparatuses connected thereto, whereby the management device accesses a link network, from which the management device retrieves the apparatus specific information, whereby the management device requests the apparatus specific information autonomously from the link network and installs the retrieved apparatus specific information autonomously into its system.

According to another aspect of the invention, for autonomous request of the apparatus specific information of the at least one field apparatus, the management device queries the apparatus identification number, the firmware version, and the address of a web server, which comprises the apparatus specific information. The apparatus specific information is retrieved from the link network, in particular the internet, comprising a server, a page generator, and a data base.

Further, the management device accesses an apparatus type data base for transmitting apparatus specific information of a field apparatus selected by the management device and connected thereto.

According to yet another aspect of the present invention, the management device accesses a customer data base for transmitting specific data of a special customer selected by the management device. The management device accesses a service data base.

According to a further aspect, the field apparatus is a measuring unit. Particularly, the field apparatus may be realized as a fill level measuring unit for measuring a fill level, for instance of a liquid in a tank, or may be realized as a pressure measuring unit. The management device comprises a PC with a process control unit or a device type manager (DTM). Moreover, the management device occasions autonomously an update of the field apparatus software.

According to still a further aspect of the present invention, the management device queries the apparatus identification number of the at least one field apparatus, which is stored in or at the field apparatus in electronic, electromechanical, or in optical form.

The management device reads-out the apparatus identification number of the at least one field apparatus via the bus, a serial interface, a parallel interface, an optical scanner or electromechanically. Moreover, the management device reads the apparatus identification number of the field apparatus automatically or by means of specific software into its memory and subsequently formulates the request to the link network.

One more aspect of the invention is that the management device formulates the request as WEB page request, which is directed to a WEB server, an FTP server or a special service of the manufacturer of the at least one field apparatus. For requesting the apparatus specific information via the link network, an access authorization of the management device is inquired.

Method according to claim 1, whereby the management device requests a technical manual, operating instructions, or approval documents as apparatus specific information.

Still another aspect of the present invention is that the management device requests software updates and upgrades for the field apparatus as apparatus specific information directly from the manufacturer via the internet. The management device requests apparatus specific information from a customer owned info data base, into which a user can input additional information.

According to still another aspect of the present invention, a user contacts the support of the manufacturer via the management device and the link network, to request apparatus specific information.

According to an aspect of the present invention, a method for providing apparatus specific information for at least one field apparatus is provided, which is connected via a bus to a management device managing apparatuses connected thereto, whereby the management device accesses a link network, from which the management device retrieves the apparatus specific information, whereby the management device requests the apparatus specific information autonomously from the link network and installs the retrieved apparatus specific information autonomously into its system, whereby for autonomous request of the apparatus specific information of the at least one field apparatus, the management device queries the apparatus identification number, the firmware version, and the address of a web server, which comprises the apparatus specific information, whereby the management device further occasions autonomously an update of the field apparatus software.

According to another aspect of the present invention, a system, comprising a management device, a field apparatus, and an access to a link network is provided, whereby the management device is connected to the field apparatus via a bus, and is adapted to autonomously request apparatus specific information over the link network and to autonomously install the retrieved apparatus specific information into its system.

Another aspect of the present invention is that the management device is adapted to query the apparatus identification number, the firmware version, and the address of a web server, which comprises the apparatus specific information to autonomously request the apparatus specific information.

Still a further aspect of the present invention is that the management device is connectable to the link network, in particular the internet, comprising a server, a page generator, and a data base. Moreover, the management device is adapted to access an apparatus type data base for transmitting apparatus specific information of a selected field apparatus. The management device is adapted to access a customer data base for transmitting specific data of a special customer selected by the management device.

Moreover, the management device is adapted to access a service data base. According to another aspect of the present invention, the field apparatus is a measuring unit. The management device comprises a PC or a device type manager (DTM).

According to still another aspect of the present invention, the management device is adapted to autonomously occasion an update of the field apparatus software.

Further, an apparatus identification number of the at least one field apparatus is stored in or at the field apparatus in electronic, electromechanical, or in optical form. The management device is adapted to read-out the apparatus identification number of the at least one field apparatus via the bus, a serial interface, a parallel interface, an optical scanner or electromechanically.

Yet one more aspect of the present invention is that the management device is adapted to read the apparatus identification number of the field apparatus automatically or by means of specific software into its memory and subsequently to formulate the request to the link network.

Still a further aspect of the invention is that the management device is adapted to formulate the request as WEB page request, which is directed to a WEB server, an FTP server or a special service of the manufacturer of the at least one field apparatus.

Moreover, according to another aspect of the present invention, the management device is adapted to request software updates and upgrades for the field apparatus as apparatus specific information directly from the manufacturer via the internet.

According to one more aspect of the present invention, the management device is adapted to request apparatus specific information from a customer owned info data base, into which a user can input additional information. Moreover, the management device is integrated into a customer documentation system.

According to an aspect of the present invention, a system is provided, comprising a management device, a field apparatus, and an access to a link network whereby the management device is connected to the field apparatus via a bus and is adapted to autonomously request apparatus specific information over the link network and to autonomously install the retrieved apparatus specific information into its system., whereby the management device is connectable to the link network, in particular the internet, comprising a server, a page generator, and a data base, whereby the management device further is adapted to request software updates and upgrades for the field apparatus as apparatus specific information directly from the manufacturer via the internet, and whereby the management devices adapted to query the apparatus identification number, the firmware version, and the address of a web server, which comprises the apparatus specific information to autonomously request the apparatus specific information.

### BRIEF DESCRIPTION OF THE DRAWINGS

- Fig. 1: is a schematic diagram of a documentation system according to prior art;
- Fig. 2: is a schematic diagram of an electronic documentation system according to prior art;
- Fig. 3: is a schematic diagram of the system according to the present invention;
- Fig. 4: is a schematic diagram of the system according to the present invention;
- Fig. 5: is a screenshot showing apparatus specific information;
- Fig. 6: is a screenshot showing apparatus specific information retrievable by the manufacturer's homepage via the internet.

### DETAILED DESCRIPTION OF EXEMPLARY EMBODIMENTS OF THE PRESENT INVENTION

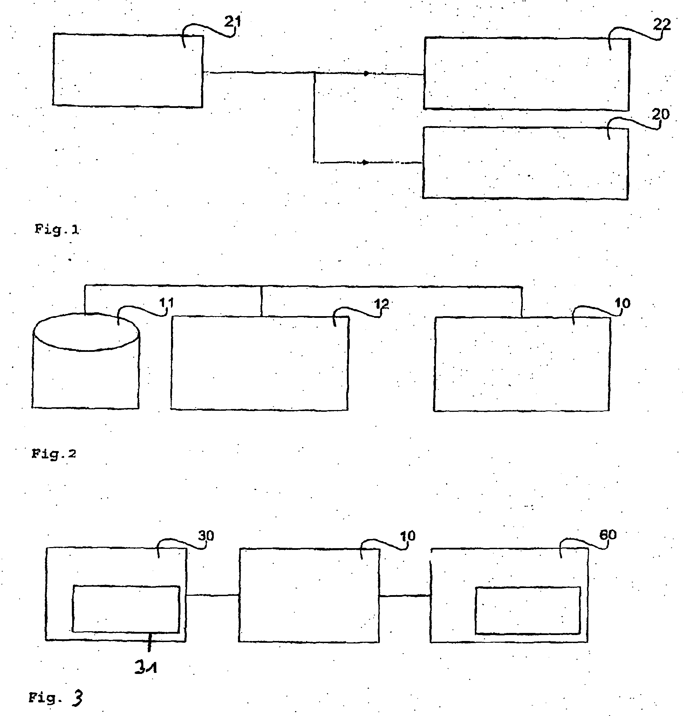

According to Fig. 1, a schematic diagram of a documentation system known from prior art is shown. After the apparatus 21 is completed, operating instructions are either added as paper documents 22 or can be downloaded from the internet 20 as electronic document, e.g. in form of a PDF file, after searching the internet for the correct apparatus type. For searching the internet 20, however, the user had to search for the apparatus type on the web page of the manufacturer and had to download the electronic documents, data or software from the internet.

Also other characteristics of a the finished field apparatus 21 which can be a sensor or an actuator, like serial number, manufacturing data, linearity parameters, measuring range, operative range with respect to temperature, electrical characteristics (operating voltage, connection power, output characteristics, etc.) can be determined according to prior art manually, using the paper documents 22, or by searching the internet.

In Fig. 2 another schematic diagram of a documentation system according to prior art is shown. This is an alternative to a paper archive. The system comprises a PC 12, a process control system 10, and a CD ROM or hard disc 11 connected to each other. The CD-ROM or hard disc 11 is employed for storing product specific data and documents. Also using this networked documentation system, the user has to assign the document file to a measuring unit (TAG no.) manually, bearing the risk of input errors. Also searching the internet for software updates, apparatus upgrades, and so on has to be carried out manually with this arrangement according to prior art.

Fig. 3 is a schematic diagram showing the inventive system. A field apparatus 30, like a sensor or actuator, is connected to a process control system comprising a management device 10 managing the apparatuses connected thereto. The field apparatus 30 and the management device are connected to each other via a bus, like for example a field bus. The management device 10 can be a server with corresponding software tolls, like a device type manager or it can also be a PC having an access to the internet 60. The management device 10 can be integrated into a customer documentation system. Using the apparatus identification number, the management device 10 autonomously requests the operating manual, new firmware, factory settings, user instructions, QS documents etc. from a web server 60 comprising a product data base containing the necessary information and installs the retrieved data or software autonomously into its system.

The management device is also capable of autonomously occasioning an update of the field apparatus software. To fulfill these comprehensive tasks, the management device 10 needs the following information, which he obtains from the field apparatus 30 via the field bus: the product information number, the firmware version, and the address of the web server 60, on which the documents are stored.

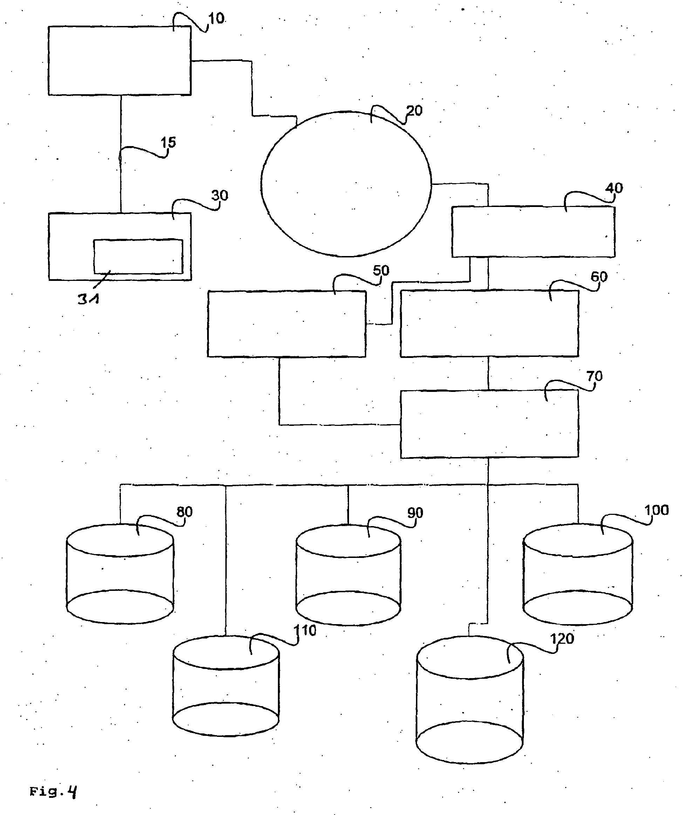

According to Fig. 4, showing a schematic diagram of the inventive system, it is possible for a user to obtain information like product description, operating manual, QS documents, service information and so on concerning a specific field apparatus 30 by means of a process control system or PC comprising the management device 10. An identification number is stored on or in the field apparatus in electronic, electromechanical, or in optical form, which is transmitted by the PC comprising the management device 10 to the link network 20 or internet. The PC comprising the management device 10 and the field apparatus 30 are connected to each other via a bus 15, like field bus, Ethernet, Bluetooth or WLAN, serial or parallel interfaces, optical scanners, etc.

The apparatus identification number 31 contains the manufacturer identification, the apparatus type identification, an unambiguous serial number, as well as the software firmware version of the apparatus. The management device 10 can read either automatically or upon request of a user the apparatus information into its memory, e.g. by means of the device type manager, and form this information, formulate a request towards the link network 20. This request can be formulated as WEB page request
(https://www.vega.com/ProduktSearch.aspx?language=de&vendor=b208&produkt=252&seri al=11688303&firmware=1.2.3). This request is directed via the internet 20 to the WEB server, FTP server or a special service of the manufacturer. By means of the information transmitted to the URL, the page generator program 70 is enabled to determine information with respect to the apparatus 30. This can result by the command in an SQL driver "select * from productTyp.DB where (Vendor=b208) and (product=252)"). Then a web page can be sent via the internet 20 to the process control system or PC containing the management device 10.

Additionally, to protect customer specific information, an access authorization 40 can be provided. By this it is guaranteed that customer data are not accessible for third parties.

The data transmitted in this manner can be apparatus specific information like apparatus description, operating manual or approval documents. However, also advanced information can also be provided as factory settings, repair documentation, or service, operating data, and so on. All these data and information is stored in data bases 80, 90, 100, 110, 120 in the internet 20. The types of data bases are: customer data base 80, apparatus type data base 90, apparatus data base 100, service data base 110, customer owned info data base 120.

The user can retrieve safety instructions with respect to the previous apparatus - hardware and software status, callbacks or firmware updates recommended by the manufacturer from the service data base 110 and / or from the apparatus data base 90. Software updates and add-ons can also be transmitted directly from the manufacturer via the internet to the PC comprising the management device 10. As far as a direct connection to the apparatus exists, this software can also be transmitted immediately to the field apparatus.

The customer owned info data base 120 is adapted for the customer to input his own additional information, like for example installation locality, maintenance intervals, as well as own comments. By this, a central information data base including al necessary information with respect to the apparatus is established.

The system further is adapted for the user to directly contact the manufacturer's support via the internet 20 from his PC comprising the management device 10 by means of email or web page request. The user will then obtain assistance via the internet or the phone directly during setup of the apparatus.

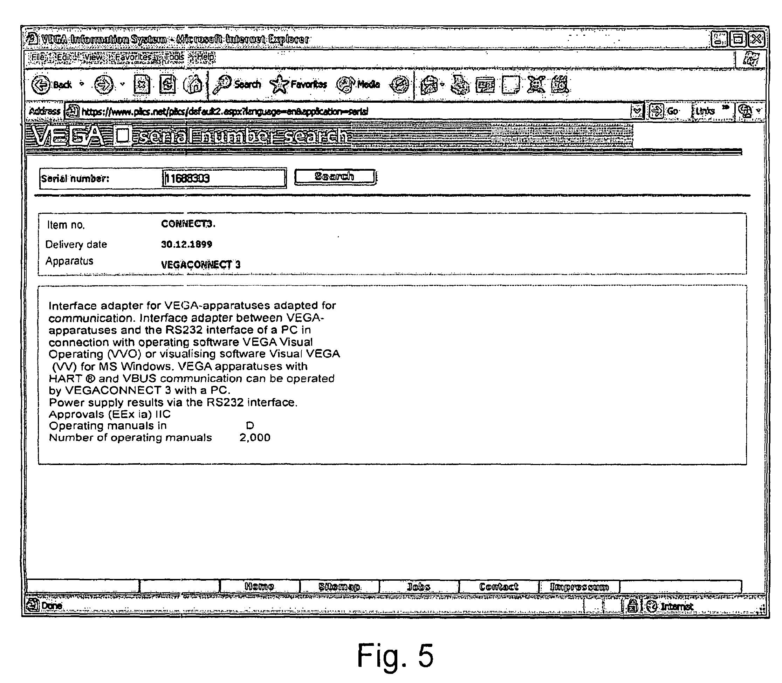

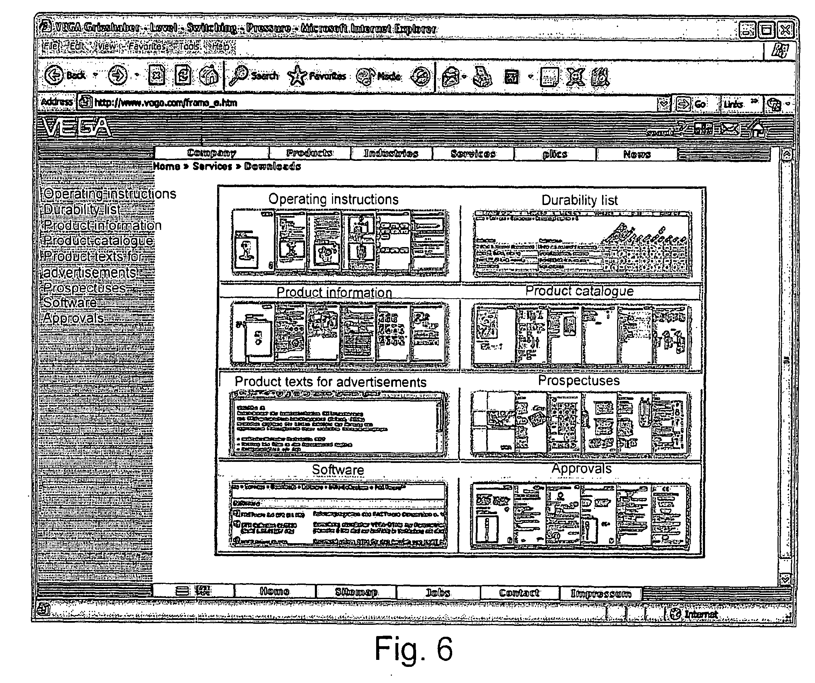

Fig. 5 shows a screenshot of one of the simplest forms of apparatus specific information retrieved from the internet. In this case, an apparatus description was requested and is displayed on a screen connected to the PC comprising the management device 10. According to Fig. 6, apparatus specific information can be chosen from a variety of information like: operating manual, durability list, product information, product catalogue, product text for advertisements, prospectuses, repair form, software, authorizations.

Other embodiments of the invention are within the scope of the attached claims.

## Claims

1. A method for providing apparatus specific information for at least one field apparatus (30), which is connected via a bus (15) to a management device (10) managing apparatuses connected thereto, whereby the field apparatus (30) is a measuring unit, **characterized in that**
the method comprises the following steps:
- the management device (10) accesses a link network (20), which link network (20) comprises a server (50, 60) and a data base (80, 90, 100, 110, 120), from which the management device retrieves the apparatus specific, information,
- the management device (10) requests apparatus specific information autonomously from the link network (20), and
- the management device (10) installs the retrieved apparatus specific information autonomously into its system;
whereby the management device (10) queries an apparatus identification number of the at least one field apparatus (30), which is stored in or at the field apparatus (30) in electronic, electromechanical or in optical form.

2. The method according to claim 1, whereby
for autonomous request of the apparatus specific information of the at least one field apparatus (30), the management device (10) queries the apparatus information number, the firmware version, and the address of a web server, which comprises the apparatus specific information.

3. The method according to claim 1 or 2, whereby
the management device (10) retrieves the apparatus specific information from the link network (20), in particular the internet, further comprising a page generator (70).

4. The method according to any of claims 1 to 3, whereby
the management device (10) accesses an apparatus type data base (90) for transmitting apparatus specific information of a field apparatus (30) selected by the management device (10) and connected thereto.

5. The method according to any of claims 1 to 4, whereby
the management device (10) accesses a customer data base (80) for transmitting specific data of a special customer selected by the management device (10).

6. The method according to any of claims 1 to 5, whereby
the management device (10) accesses a service data base (110).

7. The method according to any of claims 1 to 6, whereby
the management device (10) comprises a PC or a device type manager (DTM).

8. The method according to any of claims 1 to 7, whereby
the management device (10) occasions autonomously an update of the field apparatus software.

9. The method according to any of claims 1 to 8, whereby
the management device (10) reads-out the apparatus identification number of the at least one field apparatus (30) via the bus (15), a serial interface, a parallel interface, an optical scanner or electromechanically.

10. The method according to any of claims 1 to 9, whereby
the management device (10) reads the apparatus identification number of the field apparatus (30) automatically or by means of specific software into its memory and subsequently formulates the request to the link network (20).

11. The method according to any of claims 1 to 10, whereby
the management device (10) formulates the request as WEB page request, which is directed to a WEB server, an FTP server or a special service of the manufacturer of the at least one field apparatus (30).

12. The method according to any of claims 1 to 11, whereby
for requesting the apparatus specific information via the link network (20), an access authorization of the management device (10) is inquired.

13. The method according to any of claims 1 to 12, whereby
the management device (10) requests a technical manual, operating instructions or approval documents as apparatus specific information.

14. The method according to any of claims 3 to 13, whereby
the management device (10) requests software updates and upgrades for the field apparatus (30) as apparatus specific information directly from the manufacturer via the internet.

15. The method according to any of claims 1 to 14, whereby
the management device (10) requests apparatus specific information from a customer owned info data base, into which a user can input additional information.

16. The method according to any of claims 1 to 15, whereby
a user contacts the support of the manufacturer via the management device (10) and the link network (30), to request apparatus specific information.

17. The method according to any of claims 1 to 16, whereby
the measuring unit consists of a fill level measuring unit.

18. The method according to any of claims 1 to 16, whereby
the measuring unit consists of a pressure measuring unit.

19. A system, comprising
a management device (10),
a field apparatus (30), whereby the field apparatus (30) is a measuring unit; and
an access to a link network (20), the link network comprising
a server (50, 60); and
a data base (80, 90, 100, 110, 120);
**characterized in that**
the management device (10) is connected to the field apparatus (30) via a bus (15), and is adapted to autonomously request apparatus specific information over the link network (20) and to autonomously install the retrieved apparatus specific information into its system; and
whereby the management device (10) is adapted to query an apparatus identification number of the at least one field apparatus (30), which is stored in or at the field apparatus (30) in electronic, electromechanical or in optical form.

20. The system according to claim 19, whereby
the management device (10) is adapted to query the apparatus identification number, the firmware version, and the address of a web server, which comprises the apparatus specific information to autonomously request the apparatus specific information.

21. The system according to claim 19 or 20, whereby
the management device (10) is connectable to the link network (20), in particular the internet, further comprising a page generator (70).

22. The system according to any of claims 19 to 21, whereby
the management device (10) is adapted to access an apparatus type data base (90) for transmitting apparatus specific information of a selected field apparatus (30).

23. The system according to any of claims 19 to 22, whereby
the management device (10) is adapted to access a customer data base (80) for transmitting specific data of a special customer selected by the management device (10).

24. The system according to any of claims 19 to 23, whereby
the management device (10) is adapted to access a service data base (110).

25. The system according to any of claims 19 to 24, whereby
the management device (10) comprises a PC or a device type manager (DTM).

26. The system according to any of claims 19 to 25, whereby
the management device (10) is adapted to autonomously occasion an update of the field apparatus software.

27. The system according to any of claims 19 to 26, whereby
the management device (10) is adapted to read-out the apparatus identification number of the at least one field apparatus (30) via the bus (15), a serial interface, a parallel interface, an optical scanner or electromechanically.

28. The system according to any of claims 19 to 27, whereby
the management device (10) is adapted to read the apparatus identification number of the field apparatus (30) automatically or by means of specific software into its memory and to subsequently formulate the request to the link network (20).

29. The system according to any of claims 19 to 28, whereby
the management device (10) is adapted to formulate the request as WEB page request, which is directed to a WEB server, an FTP server or a special service of the manufacturer of the at least one field apparatus (30).

30. The system according to any of claims 21 to 29, whereby
the management device (10) is adapted to request software updates and upgrades for the field apparatus (30) as apparatus specific information directly from the manufacturer via the internet.

31. The system according to any of claims 19 to 30, whereby
the management device (10) is adapted to request apparatus specific information from a customer owned info data base, into which a user can input additional information.

32. The system according to any of claims 19 to 31, whereby
the management device (10) is integrated into a customer documentation system.

## Patentansprüche

1. Verfahren zum Bereitstellen von gerätespezifischen Informationen für mindestens ein Feldgerät (30), das über einen Bus (15) mit einer Verwa.ltungsvorrichtung (10), die damit verbundene Geräte verwaltet, verbunden ist, wobei es sich bei dem Feldgerät (30) um eine Messeinheit handelt, **dadurch gekennzeichnet, dass** das Verfahren die folgenden Schritte umfasst:
- die Verwaltungsvorrichtung (10) auf ein Verbindungsnetz (20) zugreift, wobei dieses Verbindungsnetz (20) einen Server (50, 60) und eine Datenbank (80, 90, 100, 110, 120), von der die Verwaltungsvorrichtung die gerätespezifischen Informationen abruft, aufweist,
- die Verwaltungsvorrichtung (10) gerätespezifische Informationen autonom von dem Verbindungsnetz (20) anfordert, und
- die Verwaltungsvorrichtung (10) die abgerufenen gerätespezifischen Informationen autonom in ihrem System installiert;
wobei die Verwaltungsvorrichtung (10) eine Gerätekennnummer von dem mindestens einen Feldgerät (30) abruft, die in oder an dem Feldgerät (30) in elektronischer, in elektromechanischer oder in optischer Form gespeichert ist.

2. Verfahren nach Anspruch 1, wobei
die Verwaltungsvorrichtung (10) zur autonomen Anforderung der gerätespezifischen Informationen des mindestens einen Feldgeräts (30) die Geräteinformationsnummer, die Firmwareversion und die Adresse eines Webservers, der die gerätespezifischen Informationen aufweist, abruft.

3. Verfahren nach Anspruch 1 oder 2, wobei
die Verwaltungsvorrichtung (10) die gerätespezifischen Informationen von dem Verbindungsnetz (20), insbesondere dem Internet, das weiterhin einen Seitengenerator (70) aufweist, abruft.

4. Verfahren nach einem der Ansprüche 1 bis 3, wobei
die Verwaltungsvorrichtung (10) auf eine Gerätetypendatenbank (90) zugreift zum Übertragen von gerätespezifischen Informationen eines Feldgeräts (30), das von der Verwaltungsvorrichtung ausgewählt wurde (10) und mit dieser verbunden ist.

5. Verfahren nach einem der Ansprüche 1 bis 4, wobei
die Verwaltungsvorrichtung (10) auf eine Kundendatenbank (80) zum Übertragen von spezifischen Daten eines speziellen Kunden, der von der Verwaltungsvorrichtung (10) ausgewählt wurde, zugreift.

6. Verfahren nach einem der Ansprüche 1 bis 5, wobei
die Verwaltungsvorrichtung (10) auf eine Dienstdatenbank (110) zugreift.

7. Verfahren nach einem der Ansprüche 1 bis 6, wobei
die Verwaltungsvorrichtung (10) einen PC oder einen Device Type Manager (DTM) umfasst.

8. Verfahren nach einem der Ansprüche 1 bis 7, wobei
die Verwaltungsvorrichtung (10) autonom ein Update der Feldgerätesoftware veranlasst.

9. Verfahren nach einem der Ansprüche 1 bis 8, wobei
die Verwaltungsvorrichtung (10) die Gerätekennnummer des mindestens einen Feldgeräts (30) über den Bus (15), eine serielle Schnittstelle, eine parallele Schnittstelle, einen optischen Scanner oder elektromechanisch ausliest.

10. Verfahren nach einem der Ansprüche 1 bis 9, wobei
die Verwaltungsvorrichtung (10) die Gerätekennnummer des Feldgeräts (30) automatisch oder mittels spezifischer Software in ihren Speicher liest und anschließend die Anforderung an das Verbindungsnetz (20) formuliert.

11. Verfahren nach einem der Ansprüche 1 bis 10, wobei
die Verwaltungsvorrichtung (10) die Anforderung als WEB-Seitenanfiorderung formuliert, die an einen WEB-Server, einen FTP-Server oder einen speziellen Dienst des Herstellers des mindestens einen Feldgeräts (30) gerichtet wird.

12. Verfahren nach einem der Ansprüche 1 bis 11, wobei
zum Anfordern der gerätespezifischen Informationen über das Verbindungsnetz (20) eine Zugriffsberechtigung der Verwaltungsvorrichtung (10) angefragt wird.

13. Verfahren nach einem der Ansprüche 1 bis 12, wobei
die Verwaltungsvorrichtung (10) ein technisches Handbuch, eine Betriebsanleitung oder Zulassungsdokumente als gerätespezifische Informationen anfordert.

14. Verfahren nach einem der Ansprüche 3 bis 13, wobei
die Verwaltungsvorrichtung (10) Software-Updates und -Upgrades für das Feldgerät (30) als gerätespezifische Informationen direkt von dem Hersteller über das Internet anfordert .

15. Verfahren nach einem der Ansprüche 1 bis 14, wobei
die Verwaltungsvorrichtung (10) gerätespezifische Informationen von einer kundeneigenen Infodatenbank anfordert, in die ein Benutzer zusätzliche Informationen eingeben kann.

16. Verfahren nach einem der Ansprüche 1 bis 15, wobei
ein Benutzer Kontakt mit dem Kundendienst des Herstellers über die Verwaltungsvorrichtung (10) und das Verbindungsnetz (30) aufnimmt, um gerätespezifische Informationen anzufordern.

17. Verfahren nach einem der Ansprüche 1 bis 16, wobei
die Messeinheit aus einer Füllstandsmesseinheit besteht.

18. Verfahren nach einem der Ansprüche 1 bis 16, wobei
die Messeinheit aus einer Druckmesseinheit besteht.

19. System, aufweisend
eine Verwaltungsvorrichtung (10),
ein Feldgerät (30), wobei es sich bei dem Feldgerät (30) um eine Messeinheit handelt; und
einen Zugriff auf ein Verbindungsnetz (20), wobei das Verbindungsnetz
einen Server (50, 60) und
eine Datenbank (80, 90, 100, 110, 120)aufweist;
**dadurch gekennzeichnet, dass**
die Verwaltungsvorrichtung (10) über einen Bus (15) mit dem Feldgerät (30) verbunden ist und dazu eingerichtet ist, gerätespezifische Informationen autonom über das Verbindungsnetz (20) anzufordern und die abgerufenen gerätespezifischen Informationen autonom in ihr System zu installieren; und
wobei die Verwaltungsvorrichtung (10) dazu eingerichtet ist, eine Gerätekennnummer des mindestens einen Feldgeräts s (30) abzurufen, die in oder an dem Feldgerät (30) in elektronischer, in elektromechanischer oder in optischer Form gespeichert ist.

20. System nach Anspruch 19, wobei
die Verwaltungsvorrichtung (10) dazu eingerichtet ist, die Gerätekennnummer, die Firmwareversion und die Adresse eines Webservers, der die gerätespezifischen Informationen umfasst, abzurufen, um die gerätespezifischen Informationen autonom anzufordern.

21. System nach Anspruch 19 oder 20, wobei
die Verwaltungsvorrichtung (10) mit dem Verbindungsnetz (20), insbesondere dem Internet, das weiterhin einen Seitengenerator (70) aufweist, verbunden werden kann.

22. System nach einem der Ansprüche 19 bis 21, wobei
die Verwaltungsvorrichtung (10) dazu eingerichtet ist, auf eine Gerätetypendatenbank (90) zum Übertragen von gerätespezifischen Informationen eines ausgewählten Feldgeräts (30) zuzugreifen.

23. System nach einem der Ansprüche 19 bis 22, wobei
die Verwaltungsvorrichtung (10) dazu eingerichtet ist, auf eine Kundendatenbank (80) zum Übertragen von spezifischen Daten eines speziellen Kunden, der von der Verwaltungsvorrichtung (10) ausgewählt wurde, zuzugreifen.

24. System nach einem der Ansprüche 19 bis 23, wobei
die Verwaltungsvorrichtung (10) dazu eingerichtet ist, auf eine Dienstdatenbank (110) zuzugreifen.

25. System nach einem der Ansprüche 19 bis 24, wobei
die Verwaltungsvorrichtung (10) einen PC oder einen Device Type Manager (DTM) aufweist.

26. System nach einem der Ansprüche 19 bis 25, wobei
die Verwaltungsvorrichtung (10) dazu eingerichtet ist, autonom ein Update der Feldgerätesoftware zu veranlassen.

27. System nach einem der Ansprüche 19 bis 26, wobei
die Verwaltungsvorrichtung (10) dazu eingerichtet ist, die Gerätekennnummer des mindestens einen Feldgeräts (30) über den Bus (15), eine serielle Schnittstelle, eine parallele Schnittstelle, einen optischen Scanner oder elektromechanisch auszulesen.

28. System nach einem der Ansprüche 19 bis 27, wobei
die Verwaltungsvorrichtung (10) dazu eingerichtet ist, die Gerätekennnummer des Feldgeräts (30) automatisch oder mittels spezifischer Software in ihren Speicher zu lesen und anschließend die Anforderung an das Verbindungsnetz (20) zu formulieren.

29. System nach einem der Ansprüche 19 bis 28, wobei
die Verwaltungsvorrichtung (10) dazu eingerichtet ist, die Anforderung als WEB-Seitenanforderung zu formulieren, die an einen WEB-Server, einen FTP-Server oder einen speziellen Dienst des Herstellers des mindestens einen Feldgeräts (30) gerichtet wird.

30. System nach einem der Ansprüche 21 bis 29, wobei
die Verwaltungsvorrichtung (10) dazu eingerichtet ist, Software-Updates und -Upgrades für das Feldgerät (30) als gerätespezifische Informationen direkt von dem Hersteller über das Internet anzufordern.

31. System nach einem der Ansprüche 19 bis 30, wobei
die Verwaltungsvorrichtung (10) dazu eingerichtet ist, gerätespezifische Informationen von einer kundeneigenen Infodatenbank anzufordern, in die ein Benutzer zusätzliche Informationen eingeben kann.

32. System nach einem der Ansprüche 19 bis 31, wobei
die Verwaltungsvorrichtung (10) in ein Kundendokumentationssystem integriert ist.

## Revendications

1. Procédé pour délivrer des informations spécifiques à un appareil pour au moins un appareil de champ (30), lequel est connecté via un bus (15) à un dispositif de gestion (10) gérant des dispositifs connectés à celui-ci, dans lequel l'appareil de champ (30) est une unité de mesure, **caractérisé en ce que**
le procédé comporte les étapes suivantes :
- le dispositif de gestion (10) accède à un réseau de liaison (20), lequel réseau de liaison (20) comporte un serveur (50, 60) et une base de données (80, 90, 100, 110, 120), à partir de laquelle le dispositif de gestion récupère les informations spécifiques à l'appareil,
- le dispositif de gestion (10) demande des informations spécifiques à l'appareil de manière autonome depuis le réseau de liaison (20), et
- le dispositif de gestion (10) installe les informations spécifiques à l'appareil récupérées de manière autonome dans son système,
dans lequel le dispositif de gestion (10) demande un numéro d'identification d'appareil du au moins un appareil de champ (30), lequel est mémorisé dans l'appareil de champ (30) ou au niveau de celui-ci, sous forme électronique, électromécanique ou optique.

2. Procédé selon la revendication 1, dans lequel
pour une requête autonome des informations spécifiques à l'appareil du au moins un appareil de champ (30), le dispositif de gestion (10) requiert le numéro d'informations d'appareil, la version de micrologiciel, et l'adresse d'un serveur de la Toile Mondiale, qui comporte les informations spécifiques à l'appareil.

3. Procédé selon l'une quelconque des revendications 1 ou 2, dans lequel
le dispositif de gestion (10) récupère les informations spécifiques à l'appareil depuis le réseau de liaison (20), en particulier l'Internet, comportant en outre un générateur de pages (70).

4. Procédé selon l'une quelconque des revendications 1 à 3, dans lequel
le dispositif de gestion (10) accède à une base de données de type appareil (90) pour transmettre des informations spécifiques à l'appareil d'un appareil de champ (30) sélectionné par le dispositif de gestion (10) et connecté à celui-ci.

5. Procédé selon l'une quelconque des revendications 1 à 4, dans lequel
le dispositif de gestion (10) accède à une base de données client (80) pour transmettre des données spécifiques d'un client spécial sélectionné par le dispositif de gestion (10).

6. Procédé selon l'une quelconque des revendications 1 à 5, dans lequel
le dispositif de gestion (10) accède à une base de données de service (110).

7. Procédé selon l'une quelconque des revendications 1 à 6, dans lequel
le dispositif de gestion (10) comporte un PC ou un gestionnaire de type dispositif (DTM).

8. Procédé selon l'une quelconque des revendications 1 à 7, dans lequel
le dispositif de gestion (10) effectue de manière autonome une mise à jour du logiciel de l'appareil de champ.

9. Procédé selon l'une quelconque des revendications 1 à 8, dans lequel
le dispositif de gestion (10) extrait le numéro d'identification d'appareil du au moins un appareil de champ (30) via le bus (15), une interface série, une interface parallèle, un scanner optique ou de manière électromécanique.

10. Procédé selon l'une quelconque des revendications 1 à 9, dans lequel
le dispositif de gestion (10) lit le numéro d'identification d'appareil de l'appareil de champ (30) de manière automatique ou par l'intermédiaire d'un logiciel spécifique dans sa mémoire et formule par la suite la requête au réseau de liaison (20).

11. Procédé selon l'une quelconque des revendications 1 à 10, dans lequel
le dispositif de gestion (10) formule la requête en tant que demande de page de la Toile Mondiale, qui est destinée à un serveur de la Toile Mondiale, un serveur FTP ou un service spécial du fabricant du au moins un appareil de champ (30).

12. Procédé selon l'une quelconque des revendications 1 à 11, dans lequel
pour requérir les informations spécifiques à l'appareil via le réseau de liaison (20), une autorisation d'accès du dispositif de gestion (10) est demandée.

13. Procédé selon l'une quelconque des revendications 1 à 12, dans lequel
le dispositif de gestion (10) requiert un manuel technique, des instructions opérationnelles ou des documents d'homologation en tant qu'informations spécifiques à l'appareil.

14. Procédé selon l'une quelconque des revendications 3 à 13, dans lequel
le dispositif de gestion (10) requiert des mises à jour logicielles et des mises à niveau pour le dispositif de champ (30) en tant qu'informations spécifiques à l'appareil directement depuis le fabricant via l'Internet.

15. Procédé selon l'une quelconque des revendications 1 à 14, dans lequel
le dispositif de gestion (10) requiert des informations spécifiques à l'appareil depuis une base de données d'informations possédées par le client, dans laquelle un utilisateur peut entrer des informations additionnels.

16. Procédé selon l'une quelconque des revendications 1 à 15, dans lequel
un utilisateur contacte le support du fabricant via le dispositif de gestion (10) et le réseau de liaison (30), pour demander des informations spécifiques à l'appareil.

17. Procédé selon l'une quelconque des revendications 1 à 16, dans lequel
l'unité de mesure est constituée d'une unité de mesure de niveau de remplissage.

18. Procédé selon l'une quelconque des revendications 1 à 16, dans lequel
l'unité de mesure est constituée d'une unité de mesure de pression.

19. Système, comportant
un dispositif de gestion (10),
un appareil de champ (30), dans lequel l'appareil de champ (30) est une unité de mesure, et
un accès à un réseau de liaison (20), le réseau de liaison comportant
un serveur (50, 60), et
une base de données (80, 90, 100, 110, 120),
**caractérisé en ce que**
le dispositif de gestion (10) est connecté à l'appareil de champ (30) via un bus (15), et est adapté pour demander de manière autonome des informations spécifiques à l'appareil sur le réseau de liaison (20) et pour installer de manière autonome les informations spécifiques à l'appareil récupérées dans son système, et
dans lequel le dispositif de gestion (10) est adapté pour requérir un numéro d'identification d'appareil du au moins un appareil de champ (30), lequel est mémorisé dans l'appareil de champ (30) ou au niveau de celui-ci sous forme électronique, électromécanique, ou optique.

20. Système selon la revendication 19, dans lequel
le dispositif de gestion (10) est adapté pour requérir le numéro d'identification d'appareil, la version de micrologiciel, et l'adresse du serveur de la Toile Mondiale, qui comporte les informations spécifiques à l'appareil pour demander de manière autonome les informations spécifiques à l'appareil.

21. Système selon la revendication 19 ou 20, dans lequel
le dispositif de gestion (10) peut être connecté au réseau de liaison (20), en particulier l'Internet, comportant en outre un générateur de pages (70).

22. Système selon l'une quelconque des revendications 19 à 21, dans lequel
le dispositif de gestion (10) est adapté pour accéder à une base de données de type appareil (90) pour transmettre des informations spécifiques à l'appareil d'un appareil de champ (30) sélectionné.

23. Système selon l'une quelconque des revendications 19 à 22, dans lequel
le dispositif de gestion (10) est adapté pour accéder à une base de données client (80) pour transmettre des données spécifiques d'un client spécial sélectionné par le dispositif de gestion (10).

24. Système selon l'une quelconque des revendications 19 à 23, dans lequel
le dispositif de gestion (10) est adapté pour accéder à une base de données de service (110).

25. Système selon l'une quelconque des revendications 19 à 24, dans lequel
le dispositif de gestion (10) comporte un PC ou un gestionnaire de type dispositif (DTM).

26. Système selon l'une quelconque des revendications 19 à 25, dans lequel
le dispositif de gestion (10) est adapté pour effectuer de manière autonome une mise à jour du logiciel de l'appareil de champ.

27. Système selon l'une quelconque des revendications 19 à 26, dans lequel
le dispositif de gestion (10) est adapté pour extraire le numéro d'identification d'appareil du au moins un appareil de champ (30) via le bus (15), une interface série, une interface parallèle, un scanner optique ou de manière électromécanique.

28. Système selon l'une quelconque des revendications 19 à 27, dans lequel
le dispositif de gestion (10) est adapté pour lire le numéro d'identification d'appareil de l'appareil de champ (30) de manière automatique ou par l'intermédiaire d'un logiciel spécifique dans sa mémoire et pour formuler ensuite la requête au réseau de liaison (20).

29. Système selon l'une quelconque des revendications 19 à 28, dans lequel
le dispositif de gestion (10) est adapté pour formuler la requête en tant que demande de page de la Toile Mondiale, qui est destinée à un serveur de la Toile Mondiale, un serveur FTP ou un service spécial du fabricant du au moins un appareil de champ (30).

30. Système selon l'une quelconque des revendications 21 à 29, dans lequel
le dispositif de gestion (10) est adapté pour demander des mises à jour logicielles et des mises à niveau pour l'appareil de champ (30) en tant qu'informations spécifiques à l'appareil directement depuis le fabricant via l'Internet.

31. Système selon l'une quelconque des revendications 19 à 30, dans lequel
le dispositif de gestion (10) est adapté pour demander des informations spécifiques à l'appareil depuis une base de données d'informations possédées par le client, dans laquelle un utilisateur peut entrer des informations additionnelles.

32. Système selon l'une quelconque des revendications 19 à 31, dans lequel
le dispositif de gestion (10) est intégré dans un système de documentation client.
